# EUROPÄISCHE PATENTSCHRIFT

(11) **EP 2 677 174 B1**
(45) Veröffentlichungstag und Bekanntmachung des Hinweises auf die Patenterteilung: **22.02.2023**
(21) Anmeldenummer: 13170356.3
(22) Anmeldetag: 04.06.2013
(51) Int. Cl.: F04D 17/06, F04D 29/28, F04D 29/30, F16C 35/077, F04D 29/52, F04D 29/58, H02K 9/06, F04D 29/056

(54) **Lüfterrad sowie Elektromotor**
Fan and electric motor
Roue de ventilateur et moteur électrique

(30) Priorität: 20.06.2012 DE 102012105344; 10.05.2013 DE 102013104849
(43) Veröffentlichungstag der Anmeldung: 25.12.2013
(73) Patentinhaber: Vorwerk & Co. Interholding GmbH, 42275 Wuppertal (DE)
(72) Erfinder: Lichau, Christian, 44625 Herne (DE); Schmidt, Dirk, 51688 Wipperfürth (DE); Theuermann, Volker, 58453 Witten (DE); Jacobs, Carsten, 42477 Radevormwald (DE); Erner, Thomas, 42289 Wuppertal (DE); Varnhorst, Mathias, 42349 Wuppertal (DE)
(74) Vertreter: Müller, Enno

(56) Entgegenhaltungen:
- EP-A2- 2 410 183
- WO-A1-94/17306
- WO-A1-2005/029687
- DE-A1- 19 733 687
- DE-A1-102008 014 000
- DE-A1-102008 014 624
- DE-B- 1 097 077
- DE-U1- 20 118 870
- DE-U1-202009 015 605
- JP-A- H1 162 898

## Beschreibung

Die Erfindung betrifft ein Lüfterrad nach den Merkmalen des Anspruches 1. Lüfterräder der in Rede stehenden Art sind bekannt. Diese finden insbesondere Verwendung im Zusammenhang mit Elektromotoren. Ein solches Lüfterrad ist ausgelegt zum Drehantreiben desselben um die Drehachse mittels des Elektromotors, wobei im Betrieb des Elektromotors durch das Lüfterrad eine Luftströmung erzeugt wird. Diese Luftströmung dient in bekannten Ausgestaltungen zumindest teilweise zur Kühlung des Elektromotors.

Bekannte Lüfterräder weisen hierzu zunächst einen rotationssymmetrischen Grundkörper auf, an den wandungsaußenseitig Lüfterradschaufeln angeordnet sind. Diese Lüfterradschaufeln weisen mit Bezug auf die Drehachse eine radial innere Schaufeleintrittskante und eine radial äußere Schaufelaustrittskante auf, welche Kanten mit Bezug auf eine Draufsicht auf das Lüfterrad verbunden sind durch eine Schaufellängskante. Insbesondere die Schaufeleintrittskanten der Lüfterradschaufeln formen, den Anbindungsbereichen der Lüfterradschaufeln an dem Grundkörper abgewandte Lüfterradspitzen aus.

Bei einem aus der DE 1 097 077 B bekannten Lüfterrad befinden sich die Lüfterradspritzen in einer gemeinsam ausgerichteten Ebene, die in Richtung der Drehachse zu einer obersten Grundkörperebene unterhalb bzw. gerade angrenzend hierzu verläuft. Aus der EP 2 410 183 A2 ist ein Lüfterrad bekannt, bei welchem die Lüfterradspitzen zwar etwas über die oberste Grundkörperebene hinausragen, jedoch mit einem nicht relevanten Flächenanteil. Zudem überragen die Lüfterradschaufeln eine unterste Grundkörperebene in radialer Richtung.

Ausgehend von dem dargelegten Stand der Technik beschäftigt sich die Erfindung mit der Aufgabenstellung, ein Lüfterrad anzugeben, das bei herstellungstechnisch günstiger Ausgestaltung insbesondere auch hinsichtlich des Wirkungsgrades vorteilhaft ist.

Diese Aufgabe ist beim Gegenstand des Anspruches 1 gelöst, wobei darauf abgestellt ist, dass die Lüfterradspitzen den Grundkörper überragen, dass alle Lüfterradspitzen in einer gemeinsamen, quer zu der Drehachse ausgerichteten Ebene angeordnet sind, die in Richtung der Drehachse nach oben beabstandet ist zu einer obersten Grundkörperebene, dass dieser Abstand so gewählt ist, dass sich mit Bezug auf eine Seitenansicht gegen eine Lüfterradschaufel oberhalb der obersten Grundkörperebene eine 20 bis 50 % der gesamten Schaufelfläche entsprechende Schaufelteilfläche einstellt und dass in einer Projektion in Richtung auf eine unterste Grundkörperebene die Lüfterradschaufeln eine umlaufende untere Bodenrandkante nicht überragen.

Das so gestaltete Lüfterrad erweist sich hinsichtlich des Wirkungsgrades und auch der Herstellbarkeit als vorteilhaft. Die Lüfterradspitzen der radial inneren Schaufeleintrittskanten, überragen den Grundkörper in Richtung der Drehachse, wobei darüber hinaus bevorzugt ein Abstandsmaß zwischen einer obersten Grundkörperebene und den Lüfterradspitzen etwa dem 0,2- bis 0,8-Fachen der in Richtung der Drehachse betrachteten Höhe des Grundkörpers zwischen einer untersten und der obersten Grundkörperebene entsprechen kann.

Bodenseitig enden die Lüfterradschaufeln mit Abstand zu einer unteren Randkante beziehungsweise einer unteren Grundkörperebene, dies weiter mit Bezug auf die Anbindung einer radial äußeren Schaufelaustrittskante an dem Grundkörper. Das in Richtung der Drehachse betrachtete Abstandsmaß des Endes einer jeden Lüfterradschaufel zu der unteren Grundkörperebene entspricht in bevorzugter Ausgestaltung dem 0,2- bis 1-Fachen des vorbezeichneten Überstandsmaßes der Lüfterradspitzen über den Grundkörper, weiter bevorzugt dem 0,1- bis 0,5-Fachen des in Richtung der Drehachse betrachteten Abstandsmaßes zwischen oberster und unterster Grundkörperebene. Dieser entsprechend schaufelanbindungsfreie untere Bereich bildet einen Diffusorbereich aus, insbesondere einen Diffusor-Teilbereich, welcher aufgrund der beschriebenen, stetig ansteigenden Außenkontur des Grundkörpers - ausgehend von der quer zur Drehachse betrachteten Ebene, in welcher die Lüfterradschaufeln an dem Grundkörper enden - nach radial Außen bis zur unteren Grundkörperebene sich - mit Bezug zu der Drehachse - stetig erweitert. In einer Draufsicht beziehungsweise in einer Projektion in Richtung der Drehachse auf die unterste Grundkörperebene überragen die Lüfterradschaufeln die umlaufende Bodenrandkante des Grundkörpers nicht. Die Lüfterradschaufeln können in einer Draufsicht ohne gegenseitige Überlappung gebildet sind. Dies bietet insbesondere herstellungstechnische Vorteile. Insbesondere bei einem Lüfterrad mit einstückig, materialeinheitlich ausgebildetem Grundkörper und daran angeformten Lüfterradschaufeln, weiter insbesondere hergestellt in einem Kunststoff-Spritzverfahren, ergeben sich so Vorteile hinsichtlich der Entformung nach dem Spritzvorgang. Eine solche Entformung ist zufolge der vorgeschlagenen Lösung ohne Schieber möglich. Vielmehr werden die insbesondere sich zwischen den Lüfterradschaufeln im Zuge des Spritzvorganges befindlichen Formelemente in bevorzugter Ausgestaltung schraubengangartig in Richtung auf die Lüfterradspitzen herausgedreht. Diese Formelemente können entsprechend an einem gemeinsamen Oberwerkzeug angeordnet sein, über welches die Drehbewegung im Zuge der Entformung erreicht wird. Die Lüfterradschaufeln sind in einer Draufsicht beziehungsweise in einer Projektion in Richtung der Drehachse auf eine unterste, durchmessergrößte Grundkörperebene vereinzelt angeordnet, bevorzugt ohne dass in einer solchen Projektion ein Teilbereich einer Lüfterradschaufel einen Teilbereich einer weiteren Lüfterradschaufel überdeckt.

In einer bevorzugten Ausgestaltung sind vier bis acht Lüfterradschaufeln vorgesehen. Weiter bevorzugt weist das Lüfterrad sechs Lüfterradschaufeln auf, wobei jedenfalls die Lüfterradschaufeln mit Bezug zur Drehachse in Umfangsrichtung des Lüfterrades gleichmäßig verteilt angeordnet sind. Auch sind die Lüfterradschaufeln in weiter bevorzugter Ausgestaltung sämtlich gleich ausgebildet sowie sämtlich gleich auf der Außenfläche des Grundkörpers angeordnet.

Eine gerade verlaufende - mit Bezug auf die Drehachse radial innere - Schaufeleintrittskante schließt in weiter bevorzugter Ausgestaltung zu der Drehachse einen Winkel von 35 bis 55 Grad ein. So ist insbesondere eine radial ausgerichtete, jedoch mit Bezug auf eine Seitenansicht gegen die Lüfterradschaufel - ausgehend von einer Fußlinie der Schaufel - um bevorzugt etwa 45 Grad nach radial Außen gekippte Schaufeleintrittskante vorgesehen.

In Seitenansicht gegen das Lüfterrad weist der fußseitig des Grundkörpers und nicht mit Schaufeln verbundene Diffusorbereich ein Erstreckungsmaß, insbesondere entlang der Außenkontur, auf, welches bevorzugt dem 0,5- bis 0,9-Fachen des Erstreckungsmaßes der Schaufellängskante in Draufsicht entspricht.

Der Diffusorbereich des Lüfterrades weist in bevorzugter Ausgestaltung eine meridiane Länge auf, die dem 0,3- bis 0,4-Fachen der meridianen Länge der Schaufellängskante entspricht.

In weiter bevorzugter Ausgestaltung entspricht ein Radiusmaß des Übergangs der Schaufelaustrittskante in den Grundkörper dem 0,7- bis 0,95-Fachen, weiter bevorzugt dem 0,8- bis 0,9-Fachen des maximalen Radiusmaßes der Schaufelaustrittskante. Hieraus ergibt sich in bevorzugter Ausgestaltung eine Schaufelaustrittskante, welche ausgehend von der Anbindung an dem Grundkörper nach radial Außen ansteigt, dies weiter bevorzugt unter Einschluss eines Winkels zur Drehachse von 15 bis 35 Grad, weiter bevorzugt etwa 25 Grad.

Die Länge der Schaufellängskante ist - bezogen auf eine Fußlinie der Lüfterradschaufel im Anbindungsbereich an den Grundkörper - bevorzugt in einem Verhältnis von 0,5 bis 0,9 gegeben. So ist weiter bevorzugt die meridiane Länge der Schaufellängskante kleiner als die meridiane Schaufellänge im Bereich der Fußlinie, dies weiter bevorzugt in einem Verhältnis von 0,6 bis 0,8.

Der Grundkörper weist eine im Wesentlichen konische Außenkontur auf. Entsprechend ist mit bezug auf einen Vertikalschnitt durch das Lüfterrad die Außenkontur - ausgehend von einer untersten Grundkörperebene von radial Außen nach radial Innen - stetig und bevorzugt gleichmäßig ansteigend ausgebildet, wobei im Konturverlauf von radial Außen nach radial Innen auch eine Abweichung quer zur Konturerstreckung von bis zu 20 Prozent, weiter bevorzugt bis zu 10 Prozent der Konturlänge zwischen unterster und oberster Grundkörperebene beidseitig relativ zu einer konischen Konturlinie gegeben sein kann. Auch kann innerhalb der konischen Außenkontur der Neigungswinkel der Außenkontur relativ zur Drehachse über die Länge der Außenkontur unterschiedlich sein, so weiter bevorzugt eine Abweichung von 1 bis 5 Grad relativ zu der bevorzugten 30- bis 60 Grad-, weiter bevorzugt 45 Grad-Neigung der Außenkontur zur Drehachse aufweisend.

Zudem ist bevorzugt, dass die Schaufelaustrittskante im Querschnitt, insbesondere in einem parallel zur Schaufellängskante verlaufenden Schnitt, gerundet ausgebildet ist. Diese verrundete, radial äußere und somit bevorzugt der Druckseite zugeordnete Schaufelaustrittskante weist bevorzugt einen Radius auf, der dem 0,4- bis 0,9-Fachen, weiter bevorzugt 0,5- bis 0,8-Fachen der Schaufeldicke entspricht. Die Schaufeldicke ist hierbei insbesondere gemessen quer zur Erstreckungsrichtung der Schaufellängskante, dies weiter bevorzugt gemessen in einem Abstand zur Schaufelaustrittskante, der dem Radiusmaß der Schaufelaustrittskante zuzüglich 10 bis 30 Prozent entspricht. Bevorzugt ist der Radius auf der Druckseite der Schaufel vorgesehen.

In weiter bevorzugter Ausgestaltung ist vorgesehen, dass die Schaufeleintrittskante in Draufsicht auf das Lüfterrad eine sich im Wesentlichen quer zur Schaufellängsrichtung erstreckende ebene Fläche aufweist.

Weiter vorteilhaft, insbesondere hinsichtlich des Wirkungsgrades, ist zudem, dass sich eine Lüfterradschaufel in Draufsicht in einem bevorzugten Umfangswinkelbereich (Schaufelumschlingungswinkel), gemessen von der Drehachse, von 35 bis 60 Grad erstreckt. Bevorzugt ist diesbezüglich ein Schaufelumschlingungswinkel von 40 Grad bis 55 Grad, insbesondere ausgehend von der in Draufsicht bevorzugt streng radial ausgerichteten Schaufeleintrittskante bis zu dem Fußbereich der Schaufelaustrittskante im Übergang zum Grundkörper.

Es kann ein Elektromotor mit einem Rotor und einem Stator, sowie einem von dem Motor zur Kühlung des Elektromotors angetriebenen Lüfterrad vorgesehen sein, wobei eine Rotorachse des Rotors einer Drehachse des Lüfterrades entspricht, wobei weiter sich in Strömungsrichtung der Luft an das Lüfterrad eine relativ zu dem Rotor feststehende und den Stator umgebende Leitschaufelanordnung anschließt, wobei weiter der Elektromotor in einem Motorgehäuse aufgenommen ist. Ein solcher Elektromotor ist nicht Gegenstand der Erfindung.

Derartige Elektromotoren dienen insbesondere zum Antrieb von Wellen oder dergleichen in Geräten, weiter bevorzugt handgeführten Geräten. Auch ist mittels solcher Elektromotoren eine Luftströmung unter Nutzung des Lüfterrades herbeiführbar, so dass eine so gebildete Motor-/Gebläseeinheit beispielsweise zur Nutzung in einem handgeführten Staubsauger oder dergleichen Verwendung finden kann. Bevorzugt wird zumindest ein Teil der Luftströmung genutzt zur Kühlung des Elektromotors, insbesondere zur Kühlung des Rotors und des Stators. Die in Strömungsrichtung sich an das Lüfterrad anschließende Leitschaufelanordnung dient bevorzugt in Form eines Diffusors zur Vergleichmäßigung der Luftströmung, insbesondere zur Vergleichmäßigung der im Wesentlichen nach radial außen ausgeblasenen Luft im Bereich des Lüfterrades in Richtung auf eine zumindest im Wesentlichen in Richtung der Drehachse des Lüfterrades beziehungsweise des Rotors ausgerichtete Luftströmung.

Es kann vorgesehen sein, dass die Leitschaufeln in einem Radialzwischenraum eines doppelwandigen, den Elektromotor umgebenden Strömungsführungsteils ausgebildet sind, unter materialeinheitlicher Ausgestaltung, weiter bevorzugt zugleich auch einstückiger Ausgestaltung mit den Wänden des Strömungsführungsteils. Entsprechend sind die Leitschaufeln bevorzugt sowohl radial Innen als auch radial Außen an dem Strömungsführungsteil angebunden, dies weiter bevorzugt bei einer möglichen Herstellung des Strömungsführungsteiles im Kunststoff-Spritzverfahren unter einstückiger, materialeinheitlicher Ausgestaltung. Neben einer günstigen Luftführung ist hierdurch weiter auch eine günstige Herstellung des Strömungsführungsteiles zusammen mit den Leitschaufeln gegeben. Die bevorzugt den Stator umgebende, weiter bevorzugt koaxial zur Drehachse des Rotors ausgerichtete innere Wand des Strömungsführungsteiles und die weiter zu der inneren Wand bevorzugt konzentrisch angeordnete äu-ßere Wand des Strömungsführungsteiles sind über die in dem so gebildeten Ringraum zwischen den Wänden angeordneten Leitschaufeln miteinander verbunden. Das Strömungsführungsteil formt hierbei weiter bevorzugt ein zentrales Bauelement für den Elektromotor, an welchem alle weiteren Komponenten, wie insbesondere der Stator mit dem Rotor und der Rotorwelle, darüber hinaus bevorzugt auch eine Lüfterradabdeckung befestigt werden.

Es kann vorgesehen sein, dass das Lüfterrad einen Grundkörper mit einer im Längsquerschnitt, d. h. einer die Drehachse in ihrer Erstreckung aufnehmenden Ebene, gegebene Außenkontur aufweist und dass eine Außenkontur der inneren Wand des Strömungsführungsteils an die Außenkontur des Grundkörpers anschließt. Die Außenkontur der radial inneren Wand des Strömungsführungsteiles nimmt entsprechend, insbesondere im Übergangsbereich zu dem Lüfterrad die Außenkontur insbesondere des dem Strömungsführungsteil zugewandten Endbereiches des Lüfterrades auf, bildet entsprechend, wie weiter bevorzugt, hinsichtlich der Kontur eine Verlängerung der Außenkontur des Lüfterrades.

Weiter bevorzugt verläuft die Außenkontur der inneren Wand des Strömungsführungsteils stetig gekrümmt, wobei ein örtlicher Krümmungsradius in Strömungsrichtung, d.h. insbesondere beginnend im Bereich des Konturüberganges zum Lüfterrad, zunimmt. Bevorzugt zieht sich der örtliche Krümmungsradius vom bevorzugt konischen Laufradkörper in einem meridianen Schnitt bis in einen achsparallelen Bereich, in welchem Bereich zudem bevorzugt auch die Leitschaufeln in Strömungsrichtung betrachtet enden.

Eine Leitschaufel, bevorzugt alle Leitschaufeln, verlaufen in einem Längsschnitt quer zu ihrer Erstreckung in Strömungsrichtung gekrümmt, dies unter Ausbildung einer - bei Betrachtung in Richtung der Drehachse vom Lüfterrad gesehen - sichtbaren Leitschaufelsaugseite und einer durch die Leitschaufelsaugseite überdeckten Leitschaufeldruckseite. Der Krümmungsradius einer jeden Leitschaufel ist weiter bevorzugt über die gesamte Erstreckungslänge gleichbleibend gewählt, weiter bevorzugt zumindest annähernd gleichbleibend mit einer Abweichung von bis zu 10 oder 20 Prozent zu einem mittleren Radius nach unten und/oder nach oben. Entsprechend sind die Leitschaufeln mit Bezug auf den Umfang der inneren und/oder äußeren Wand des Strömungsführungsteils gekrümmt derart, dass die Schaufeldruckseite von der Leitschaufel weg betrachtet konvex und die Schaufelsaugseite von der Leitschaufel weg betrachtet konkav gekrümmt verlaufen.

Die im Betrieb des Elektromotors ablösungsgefährdete Saugseite der Leitschaufeln weist im Meridianschnitt bevorzugt eine Querschnittsverengung, entsprechend bevorzugt eine Verengung zwischen der Außenfläche der inneren Wand und der Innenfläche der äußeren Wand des Strömungsführungsteiles auf, dies im Vergleich zu der Druckseite einer Leitschaufel. Entsprechend tritt im Bereich der Saugseite einer jeden Leitschaufel im Betrieb des Elektromotors eine Strömungsbeschleunigung auf. Dies erweist sich positiv, um Ablösungen und dadurch niedrigere Wirkungsgrade und Geräusche zu vermeiden.

Auf der Schaufeldruckseite ist bevorzugt ein unstetiger Querschnittssprung mit einer Tiefe vorgesehen, die der 1- bis 4-Fachen der turbulenten Grenzschichtdicke entspricht. Merkliche Strömungsverluste treten zufolge dessen nicht auf, vielmehr bewirkt der Einschlagwirbel eine gute Kühlung des Statorpakets. Die turbulente Grenzschicht bildet sich praktisch über die gesamte Fläche der Schaufeldruckseite auf dieser aus. Sie kann eine Dicke im Bereich von 0,2 bis 2,2 mm, weiter bevorzugt im Bereich von 0,3 bis 2 mm aufweisen.

In weiter bevorzugter Ausgestaltung ist vorgesehen, dass die Außenseite der inneren Wand des Strömungsführungsteils in einem Längsquerschnitt umfangsmäßig verteilte Rücksprungbereiche aufweist, die zu einer radialen Erweiterung des Abstandes zwischen der Außenfläche der inneren Wand und der Innenfläche der äußeren Wand des Strömungsführungsteils führen.

Hierbei verläuft die Kontur der Außenfläche der inneren Wand in einem Meridianschnitt in den Rücksprungbereichen bevorzugt parallel zur Drehachse. Alternativ nimmt die innere Wand in den Rücksprungbereichen einen spitzen Winkel zur Drehachse ein, welcher Winkel jedoch in weiter bevorzugter Ausgestaltung kleiner gewählt ist als die Kontur der Außenfläche der inneren Wand in Umfangsrichtung betrachtet außerhalb der Rücksprungbereiche, weiter insbesondere im Bereich der Saugseite einer jeden Leitschaufel.

Der Rücksprungbereich ist bezogen auf eine Draufsicht bevorzugt der Leitschaufeldruckseite zugeordnet.

Insbesondere zur unmittelbaren Kühlung durch die Luftströmung weist die innere Wand des Strömungsführungsteils bevorzugt Durchbrüche zu dem Stator auf. Entsprechend liegt der Stator hinter den weiter bevorzugt fensterartig ausgebildeten Durchbrüchen frei zur Umströmung durch die Kühlluft. So sind weiter bevorzugt über den Umfang der inneren Wand ein bis acht, weiter bevorzugt zwei bis vier solcher Durchbrüche vorgesehen, wobei jeweils ein Durchbruch in Umfangsrichtung betrachtet zwischen zwei Leitschaufeln vorgesehen ist.

In weiter bevorzugter Ausgestaltung ist die innere Wand des Strömungsführungsteils einstückig und materialeinheitlich verbunden mit einem Lagerbereich für das Lüfterrad, wobei weiter bevorzugt der Lagerbereich sowie die inneren und äußeren Wände des Strömungsführungsteiles insgesamt bevorzugt das Motorgehäuse oder einen Teilbereich desselben ausformen.

In diesem Zusammenhang erweist es sich weiter von Vorteil, wenn, wie weiter bevorzugt, bezogen auf einen Längsquerschnitt der im feststehenden Bereich des Motorgehäuses ausgebildete Lagerbereich des Lüfterrades sich in Überdeckung zu dem Grundkörper des Lüfterrades befindet, insbesondere in einer in Richtung der Drehachse betrachteten vertikalen Überdeckung. Entsprechend ist bevorzugt, dass das Lüfterrad insbesondere mit dessen Grundkörper den Lagerbereich des Motorgehäuses überfängt.

Der Lagerbereich des Motorgehäuses erstreckt sich in weiter bevorzugter Ausgestaltung - ausgehend von einer unteren Grundkörperebene des Lüfterrades beziehungsweise ausgehend von einer quer zur Drehachse ausgerichteten Trennebene zwischen der Kontur des Lüfterrad-Grundkörpers und der Außenkontur der inneren Wand - konisch, sich von radial Außen nach radial Innen und in Richtung auf das Lüfterrad durchmesserverringernd.

Der Lagerbereich ist in weiter bevorzugter Ausgestaltung durch zwei in Richtung der Drehachse beabstandete Lager, insbesondere Wälzlager, weiter bevorzugt Wälzlager, gebildet. Der Schwerpunkt der Baueinheit aus Laufrad und Lagerungsbereich befindet sich bevorzugt zwischen den genannten Wälzlagern, in axialer Richtung. Weiter bevorzugt verschoben zu dem oberen, laufradseitigen Wälzlager.

Weiter bevorzugt können die Wälzlager in Axialrichtung durch eine Druckfeder beaufschlagt sein derart, dass sie tendenziell voneinander weggedrückt werden.

Darüber hinaus bevorzugt befindet sich der Schwerpunkt quer zu der Rotationsachse im Bereich der konischen Gestaltung des Lagerbereiches des Motorgehäuses.

Das untere Wälzlager ist bevorzugt in einer Richtung quer zur Rotationsachse in Überdeckung zu einer Wicklung des Elektromotors.

Die Absolutmaße des Lüfterrades betragen hinsichtlich des größten (unteren) Durchmessers etwa 25 bis 35 mm, weiter bevorzugt circa 30 mm, die größte Höhe 15 bis 25 mm, weiter bevorzugt circa 20 mm.

Der genannte Schwerpunkt ist darüber hinaus bevorzugt in Absolutmaß etwa 3 bis 8 mm, bevorzugt 5 bis 6 mm unterhalb des oberen Wälzlagers.

Der Grundkörper des Lüfterrades ist bevorzugt insbesondere hinsichtlich seiner Außenkontur in einem Längsquerschnitt gleichfalls zumindest annähernd konisch ausgebildet, dies weiter bevorzugt auch hinsichtlich einer inneren Kontur, so dass sich im Wesentlichen ein kreiskegelstumpfförmiger Grundkörper ausbildet. Dessen innere Kontur verläuft hierbei in einem Meridianschnitt bevorzugt zumindest annähernd parallel zu der Außenkontur des Grundkörpers, weiter bevorzugt zugleich auch zumindest annähernd parallel zu der Außenkontur des Lagerbereiches.

So ist im Überdeckungsbereich ein von radial Außen nach radial Innen ansteigender Spalt zwischen der Außenfläche des Lagerbereiches und der Innenfläche des Grundkörpers des Lüfterrades ausgebildet. Hierbei ist ein Spaltmaß zwischen der Außenfläche des Lagerbereiches und der Innenfläche des Grundkörpers, gemessen bevorzugt senkrecht zu den Flächen, gewählt, das bevorzugt der in selber Richtung betrachteten Stärke der Grundkörperwandung und/oder der Lagerbereichwandung entspricht.

Zudem ist bevorzugt vorgesehen, dass mehr Leitschaufeln vorgesehen sind als Lüfterradschaufeln. So weist das Strömungsführungsteil in bevorzugter Ausgestaltung zwölf bis zwanzig, weiter bevorzugt sechzehn Leitschaufeln auf, während das Lüfterrad bevorzugt vier bis acht, weiter bevorzugt sechs Lüfterradschaufeln besitzt. Weiter ist diesbezüglich bevorzugt vorgesehen, dass die Anzahl der Leitschaufeln dem 2- bis 5-Fachen der Anzahl der Lüfterradschaufeln entspricht.

Um eine direkte Schallabstrahlung vom Laufrad zum Strömungsführungsteil-Austrittsbereich zu verhindern, ist weiter bevorzugt vorgesehen, dass das maximale Radiusmaß der Lüfterradschaufeln kleiner ist als das Radiusmaß im Bereich der Außenwand der inneren Strömungsführungsteil-Wand. Diesbezüglich ist bevorzugt ein Verhältnis von 1:1,1 bis hin zu 1:1,5. Die notwendige Schallreflektion an einer bevorzugt vorgesehenen Gebläsedeckelwand reduziert weiter das Geräusch.

Der in seiner Höhe relativ konstante Spalt zwischen der bevorzugt konischen Laufradinnenseite und dem ebenfalls bevorzugt konisch gestalteten Lagerbereich gewährleistet, dass Flüssigkeiten und andere Fremdpartikel im Betrieb des Elektromotors von einem im Lagerbereich bevorzugt vorgesehenen Lager ferngehalten werden. Auch in einer waagerechten Anwendung und bei stillstehendem Elektromotor wird Flüssigkeit durch eine gebildete "Wasserrinne" nach unten geführt und vom Lager ferngehalten, wobei der Grundkörper im Bereich seiner umlaufenden Randkante in der untersten Grundkörperebene eine Abrisskante bildet.

Das bevorzugte Verhältnis von Lüfterradschaufeln zu Leitschaufeln von 6:16 reduziert tonale Geräuschanteile.

Beschrieben wird weiterhin ein Elektromotor mit einem Rotor und einem Stator, sowie einem von dem Rotor zur Kühlung des Elektromotors angetriebenen Lüfterrad, wobei eine Rotorachse des Rotors einer Drehachse des Lüfterrades entspricht, wobei der Elektromotor in einem Motorgehäuse mit einem Lagerbereich für eine Rotorwelle des Lüfterrades aufgenommen ist. Auch dieser Elektromotor ist nicht Teil der Erfindung.

Elektromotoren der in Rede stehenden Art sind, wie beschrieben, bekannt. Im Hinblick auf den bekannten Stand der Technik wird eine technische Problematik darin gesehen, einen Elektromotor der in Rede stehenden anzugeben, welcher eine günstige Montage insbesondere des Rotors in dem Motorgehäuse ermöglicht.

Eine mögliche Lösung der Aufgabe ist nach einem ersten Gedanken bei einem Elektromotor gegeben, bei welchem darauf abgestellt ist, dass die Rotorwelle über ein oder mehrere, in einer Hülse umfasste Wälzlager gelagert ist und dass in dem Lagerbereich mehrere im Hinblick auf den Umfang der Hülse verteilt angeordnete, in Richtung der Rotorwelle verlaufende Rippen ausgebildet sind, die zumindest teilweise unmittelbar an einer Außenfläche der Hülse anliegen. Die Hülse umfasst hierbei weiter bevorzugt das oder die Wälzlager im Bereich eines Lageraußenringes, ist weiter bevorzugt drehfest mit dem Außenring verbunden, dies weiter bevorzugt zufolge einer Pressverbindung. Mittels dieser Hülse ist die Rotorwelle in dem Motorgehäuse beziehungsweise in dem Lagerbereich gelagert, wozu der Lagerbereich eine entsprechende Aufnahme für die Hülse aufweist. Die in diesem Lagerbereich vorgesehenen Rippen erstrecken sich bevorzugt parallel zur Rotorachse. Über die Rippen ist eine zumindest partiell punktuelle beziehungsweise linienförmige Anlage der Hülse innerhalb des Lagerbereiches gegeben. Es liegen in weiter bevorzugter Ausgestaltung nur ein Teil der vorgesehenen Rippen an der Hülsen-Außenfläche an, während gegebenenfalls weiter vorgesehene Rippen, mit Bezug zu der Rotorachse, mit radialem Abstand zu der Hülse enden. Hierdurch ist insgesamt eine günstige Positionierung der Rotorwelle beziehungsweise der Hülse der Rotorwelle in dem Motorgehäuse erreichbar. Die Montage ist insgesamt vereinfacht.

Es kann vorgesehen sein, dass eine oder mehrere Rippen ausgebildet sind, die bezüglich der Außenfläche der Hülse eine Spielpassung aufweisen. Entsprechend enden diese Rippen in ihrer Erstreckung nach radial innen in Richtung auf die Rotorachse mit Abstand zu der Außenfläche der Hülse der Rotorwelle. Der Abstand beträgt in bevorzugter Ausgestaltung 0,1 bis 1 mm, weiter bevorzugt 0,2 bis 0,5 mm. Diese Spielpassung dient bevorzugt zur Unterstützung der Ausrichtung der Rotorwellen-Hülse innerhalb des Lagerbereiches. Bevorzugt sind weiter mehrere Rippen zur Ausformung einer Spielpassung vorgesehen, welche Rippen weiter bevorzugt gleichmäßig über den Umfang verteilt angeordnet sind. So sind weiter bevorzugt zwei bis sechs, insbesondere drei bis vier derartige Rippen zur Ausformung einer Spielpassung vorgesehen.

Darüber hinaus ist bevorzugt vorgesehen, dass eine oder mehrere Rippen ausgebildet sind, die bezüglich der Außenfläche der Hülse eine Presspassung aufweisen. Auch hier sind bevorzugt mehrere Rippen gleichmäßig über den Umfang der festzulegenden Hülse angeordnet, so insbesondere zwei bis sechs, weiter bevorzugt drei bis vier derartige Rippen. Die nach radial innen weisenden freien Stirnflächen sind mit Bezug auf einen Grundriss beziehungsweise einen quer zur Rotorachse betrachteten Querschnitt entlang einer Kreislinie angeordnet, welche Kreislinie bevorzugt konzentrisch zur Rotorachse verläuft. Der Durchmesser dieser Kreislinie entspricht in bevorzugter Ausgestaltung dem Außendurchmesser der Hülse im Bereich der Außenwandung. Insbesondere die an der Außenfläche der Hülse anliegenden Rippen führen in bevorzugter Ausgestaltung zu einer Presspassung der Rotorwellen-Hülse. Diese Presspassung ist in einer möglichen Ausgestaltung die alleinige Festlegung der Rotorwelle in dem Motorgehäuse. In bevorzugter Ausgestaltung dient die Presspassung zunächst zur Vorpositionierung der Rotorwelle innerhalb des Motorgehäuses bis zu einer endgültigen Festlegung der Rotorwelle beziehungsweise der Hülse mittels weiterer Maßnahmen.

Eine endgültige Festlegung des Rotors, insbesondere der Hülse der Rotorwelle im Lagerbereich ist in weiter bevorzugter Ausgestaltung erreicht durch Verklebung. In diesem Zusammenhang erweisen sich insbesondere die mehreren Rippen zur Ausbildung einer Presspassung von Vorteil, da diese die Hülse und somit die Rotorwelle in der gefundenen Position zumindest so lange sicher halten, bis der Klebstoff ausgehärtet ist. Der Klebstoff kann hierbei sowohl im Bereich der Rippen zur Ausformung der Presspassung als auch im Bereich der Rippen zur Ausformung einer Spielpassung aufgetragen sein. Bevorzugt ist ein lückenfüllender Auftrag von Klebstoff im Bereich der nach radial innen weisenden freien Stirnflächen der Rippen zur Ausbildung der Spielpassung.

Auch ist bevorzugt vorgesehen, dass sich ein Teil der Rippen in Bezug auf eine die Spielpassung oder die Presspassung ausmachende Stirnfläche über eine größere Länge der Stirnfläche erstrecken als ein anderer Teil der Rippen. Bei einer diesbezüglich bevorzugten wechselweisen Anordnung von Rippen zur Bildung einer Spielpassung und Rippen zur Bildung einer Presspassung ist insbesondere eine Gruppe von Rippen in Rotorachsrichtung betrachtet länger ausgebildet als die andere Gruppe von Rippen.

So ist bevorzugt vorgesehen, dass die Spielpassungsrippen sich über eine grö-ßere Länge erstrecken als die Presspassungsrippen. Die Spielpassungsrippen dienen in erster Linie zur groben Ausrichtung und Stabilisierung der Hülse beziehungsweise der Rotorachse in der gewünschten Ausrichtung. Hierbei erstrecken sich die Spielpassungsrippen in weiter bevorzugter Ausgestaltung zumindest annähernd, weiter bevorzugt gänzlich über die axiale Länge der Hülse, weiter gegebenenfalls auch ein- oder beidseitig sich über die Hülse hinaus erstreckend. Die der zumindest vorübergehenden Fixierung der Hülse dienenden Presspassungsrippen sind demgegenüber kürzer ausgebildet, weisen hierbei bevorzugt eine axiale Länge auf, die dem 0,3- bis 0,9-Fachen, weiter bevorzugt dem 0,4- bis 0,7-Fachen der in Axialrichtung berachteten Länge der Spielpassungsrippen entspricht.

Es sind in weiter bevorzugter Ausgestaltung zwei axial distanzierte Wälzlager der Rotorwelle vorgesehen. Deren Lageraußenringe sind bevorzugt umfasst durch die Hülse, weiter bevorzugt mit der Hülse drehfest verbunden. Die Presspassungsrippen erstrecken sich in bevorzugter Ausgestaltung im Wesentlichen in dem Bereich der Hülse zwischen den Wälzlagern, so entsprechend weiter bevorzugt im axialen Abstandbereich zwischen den beiden Wälzlagern. So wird eine Beeinflussung der Wälzlager durch entstehende Presskräfte in Radialrichtung vermieden. Die Presskräfte wirken entsprechend bevorzugt außerhalb des unmittelbaren Beeinflussungsbereiches.

Die Stirnfläche einer Spielpassungsrippe weist in bevorzugter Ausgestaltung eine Umfangserstreckung von 0,5 bis hin zu 5 mm auf. Es ist entsprechend eine flächige Stirnfläche einer jeden Spielpassungsrippe vorgesehen, wobei in weiter bevorzugter Ausgestaltung diese Stirnfläche mit Bezug auf einen quer zur Rotorachse betrachteten Querschnitt geradlinig oder, wie weiter bevorzugt, kreisabschnittförmig, konzentrisch zur Rotorachse ausgebildet ist. Die Stirnfläche einer Presspassungsrippe, bevorzugt aller Presspassungsrippen ist bevorzugt verrundet, mit einer in Richtung auf die Rotorachse weisenden Balligkeit. So ist in der Montagestellung der Hülse bevorzugt eine linienartige Anlage der Hülsen-Mantelfläche an einer jeden Presspassungsrippe erreicht.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10- Schritten der jeweiligen Dimension, gegebenenfalls also auch dimensionslos, insbesondere 1,01-Fach etc., einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

Nachstehend sind das erfndungsgemäße Lüfterrad und Details des nicht zur Erfindung gehörenden Elektromotors anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: einen Elektromotor mit einem Lüfterrad der in Rede stehenden Art in einer partiell aufgebrochenen Perspektivdarstellung;
- Fig. 2: den Elektromotor mit Lüfterrad in einer Vertikalschnittdarstellung;
- Fig. 3: das Motorgehäuse mit einem Strömungsführungsteil in einer partiell geschnittenen, perspektivischen Einzeldarstellung;
- Fig. 4: das Lüfterrad in einer perspektivischen Einzeldarstellung;
- Fig. 5: die Draufsicht auf das Lüfterrad gemäß dem Pfeil V in Figur 4;
- Fig. 6: die Seitenansicht gemäß Pfeil VI in Figur 5;
- Fig. 7: die Seitenansicht gemäß Pfeil VII in Figur 6;
- Fig. 8: den Schnitt VIII-VIII in Figur 5;
- Fig. 9: in einer Einzeldarstellung eine Lüfterradschaufel in Seitenansicht;
- Fig. 10: die Draufsicht auf die Schaufel;

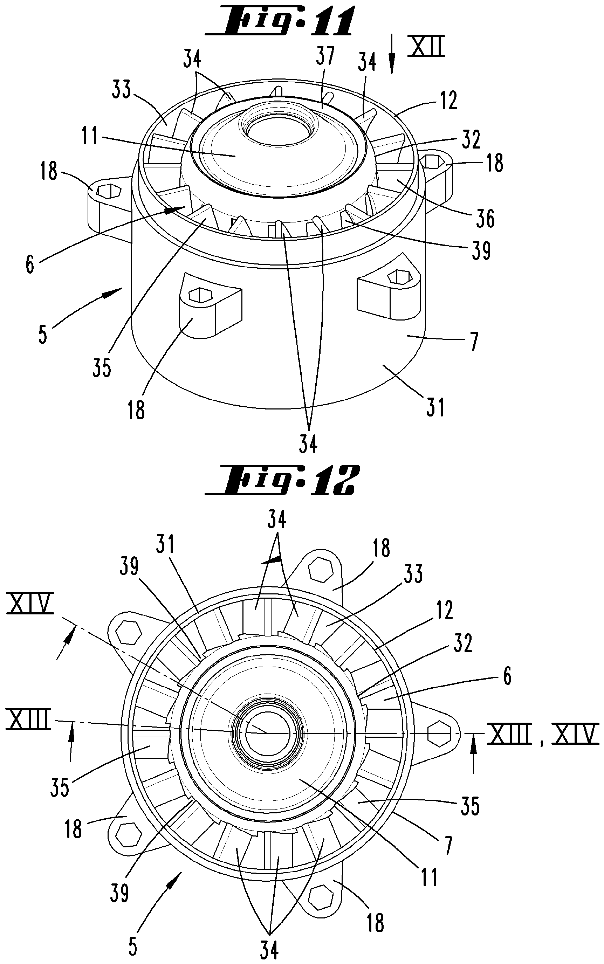

- Fig. 11: das Motorgehäuse in einer ersten Ausführungsform in perspektivischer Einzeldarstellung;
- Fig. 12: die Draufsicht hierzu gemäß Pfeil XII in Figur 11;
- Fig. 13: den Schnitt gemäß der Linie XIII-XIII in Figur 11;
- Fig. 14: den Schnitt gemäß der Linie XIV-XIV in Figur 11;
- Fig. 15: den Schnitt gemäß der XV-XV in Figur 14;
- Fig. 16: das Motorgehäuse in einer aufgeschnittenen, perspektivischen Detaildarstellung, eine zweite Ausführungsform betreffend.

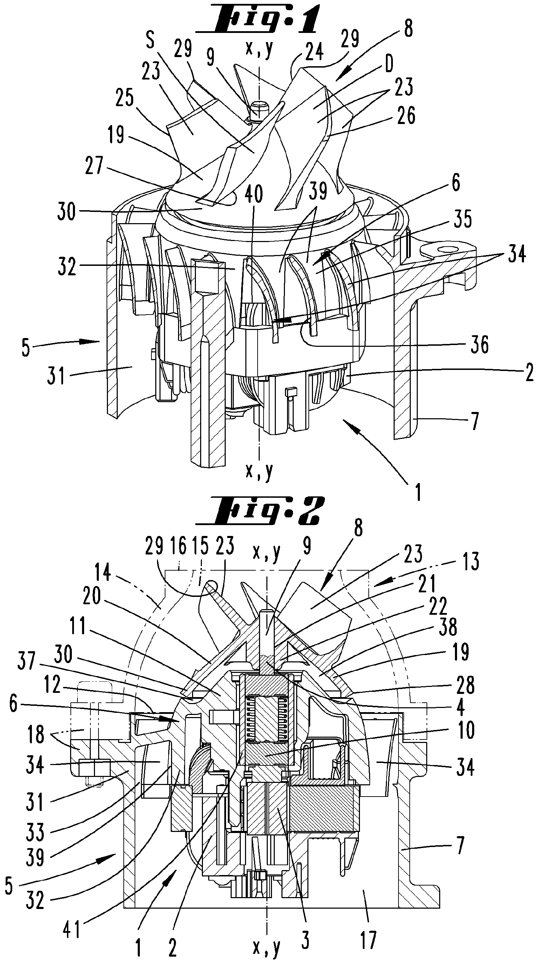

Dargestellt und beschrieben ist zunächst mit Bezug zu Figur 1 ein Elektromotor 1 mit einem Stator 2 und einem koaxial zum Stator 2 innerhalb des Stators 2 angeordneten Rotor 3.

Der Rotor 3 weist eine zugleich den Stator 2 zentral durchsetzende Rotorachse x auf. Diese wird weiter zentral aufgenommen von einer mit dem Rotor 3 drehfest verbundenen Rotorwelle 4.

Weiter ist der Stator 2 mit dem darin um die Rotorachse x drehbaren Rotor 3 in einem Motorgehäuse 5 gehaltert, welches Motorgehäuse 5 im Wesentlichen den Stator 2 mit Bezug auf die Rotorachse x vollständig umgibt.

Teil des Motorgehäuses 5 ist ein Strömungsführungsteil 6, welches sich im Wesentlichen innerhalb einer bevorzugt insgesamt umlaufenden Motorgehäusewandung 7 erstreckt. Weiter bevorzugt ist das Strömungsführungsteil 6 mit der Motorgehäusewandung 7 einstückig und weiter bevorzugt materialeinheitlich ausgebildet. In bevorzugter Ausgestaltung ist das so gestaltete Motorgehäuse 5 ein im Spritzverfahren hergestelltes Hartkunststoffteil.

Der Elektromotor 1 dient zum Antrieb eines Lüfterrades 8. Hierzu ragt ein Ende der Rotorwelle 4 frei aus dem Elektromotor 1, insbesondere über den Stator und weiter bevorzugt über das Strömungsführungsteil 6 hinaus. Dieses Rotorwellenende 9 ist weiter bevorzugt in einem Bereich axial gegenüberliegend zu dem Stator 2 ausgebildet.

Die Rotorwelle 4 ist insbesondere vor dem freien Austritt des Rotorwellenendes 9 über ein in dem Motorgehäuse 5, weiter bevorzugt in dem Strömungsführungsteil 6 angeordnetes Wälzlager 10 gelagert, welches sich in dem dargestellten Ausführungsbeispiel, wie auch weiter bevorzugt, im Wesentlichen aus zwei in Axialrichtung zueinander distanzierten und hier über eine Druckfeder gegenseitig abgestützte Kugellager-Abschnitte zusammensetzt.

Das Rotorwellenende 9 ist ausgebildet zur drehfesten Befestigung des Lüfterrades 8.

Das Lüfterrad 8 sowie ein Lagerbereich 11 des Strömungsführungsteiles 6 erstrecken sich bevorzugt über eine quer zur Rotorachse x ausgerichtete, weiter bevorzugt umlaufende Motorgehäuse-Öffnungsrandkante 12.

Weiter sind insbesondere das Lüfterrad 8 sowie der Lagerbereich 11 des Strömungsführungsteiles 6 überfangen von einem Gebläsedeckel 13, welcher insbesondere das Lüfterrad 8 kugelkalottenartig umgibt, dies bei Ermöglichung einer freien Drehbarkeit des Lüfterrades 8 um dessen Drehachse y. Die Drehachse y entspricht weiter bevorzugt der Rotorachse x.

Der Gebläsedeckel 13 weist eine umlaufende Gebläsedeckelwandung 14 auf, welche sich in Zuordnungsstellung des Gebläsedeckels 13 an dem Motorgehäuse 5 zumindest ausgehend von der Motorgehäuse-Randkante 12 - mit Bezug auf die Erstreckung der Rotorachse x - bis in eine Ebene oberhalb der höchsten Lüfterrad-Erstreckungsebene erstreckt.

Weiter weist der Gebläsedeckel 13 eine bevorzugt quer zur Rotorachse x beziehungsweise Drehachse y des Lüfterrades 8 ausgerichtete, zentral von einer Lufteintrittsöffnung 15 durchsetzte Decke 16 auf. Diese kann insbesondere außenseitig, d.h. insbesondere dem Lüfterrad 8 abgewandt, ausgebildet sein zum Anschluss eines Luftströmungskanals.

Die Luftausströmöffnung 17 ist in Axialrichtung betrachtet gegenüberliegend zu der Lufteinströmöffnung 15 ausgebildet. Diese ist insbesondere umgeben durch das der Motorgehäuse-Randkante 12 axial gegenüberliegende Ende der Motorgehäusewandung 7.

Der Gebläsedeckel 13 ist bevorzugt an dem Motorgehäuse 5 befestigbar, so weiter insbesondere strömungsdicht befestigbar, so dass eine im Betrieb des Lüfterrades 8 über die Lufteinströmöffnung 15 einströmende Luft im Wesentlichen in axialer, d.h. rotorachsparalleler Richtung des Motorgehäuse 5 durchsetzt.

Zur Festlegung des Gebläsedeckels 13 an dem Motorgehäuse 5 sind an beiden Teilen zugeordnet einer Trennungsebene zwischen den Teilen bevorzugt wandungsaußenseitig der Gebläsedeckelwandung 14 sowie der Motorgehäusewandung 7 mit Bezug zur Rotorachse x radial ausgerichtete Schraubfestlegungsvorsprünge 18 ausgeformt.

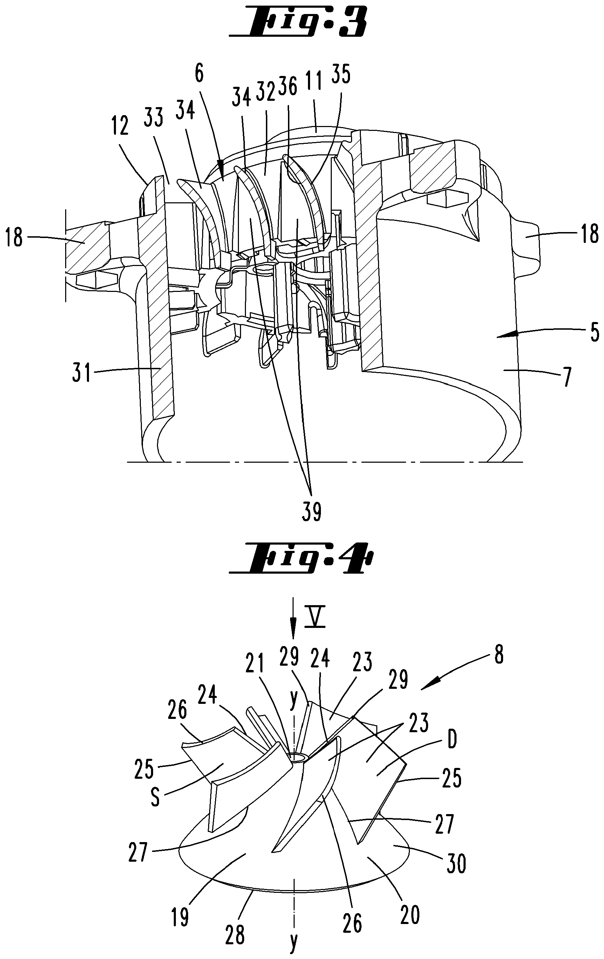

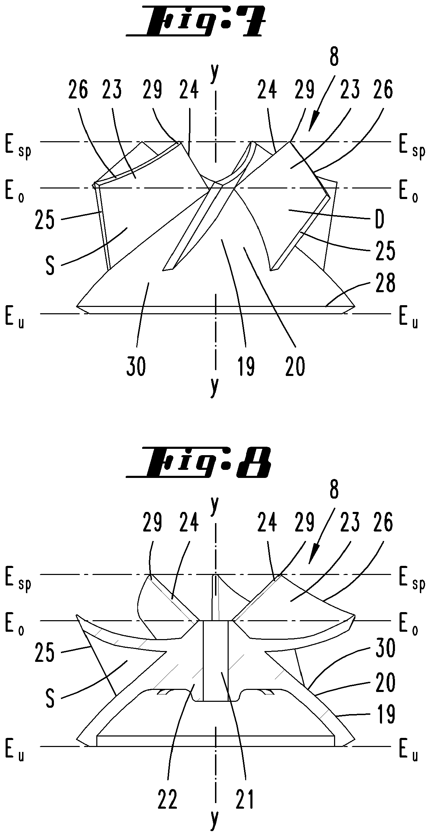

Das in den Figuren 4 bis 8 in Einzeldarstellungen gezeigte Lüfterrad 8 weist zunächst einen Grundkörper 19 auf. Dieser ist zunächst und im Wesentlichen rotationssymmetrisch gestaltet, mit einer umlaufendene Grundkörperwandung 20, die im Wesentlichen einen Hohlkegel bildet. Ausgehend von einer axial untersten Grundkörperebene Eᵤ steigt die Außenkontur des Grundkörpers 19 von radial Außen nach radial Innen bis in eine oberste Grundkörperebene Eₒ stetig an. Im Bereich der obersten Grundkörperebene Eₒ ist eine quer zur Drehachse y ausgerichtete ebene Außenkontur geschaffen.

Zentral, die Drehachse y aufnehmend, ist der Grundkörper 19 mit einer Befestigungsbohrung 21 durchsetzt, welche sich, den ebenen Spitzenbereich des Grundkörpers 19 durchsetzend, innenseitig der Grundkörperwandung 20 in einen rotationssymmetrischen, insgesamt zapfenförmigen Festlegungsbereich 22 fortsetzt.

Die hierbei innenseitig der Grundkörperwandung 20 bevorzugt quer zur Drehachse y ausgerichtete, in Richtung auf die unterste Grundkörperebene Eᵤ gerichtete Stirnfläche des Befestigungsbereiches 22 weist einen in Achsrichtung betrachteten Abstand zur untersten Grundkörperebene Eᵤ auf, die bevorzugt etwa dem 0,4- bis 0,6-Fachen, weiter bevorzugt etwa dem 0,5-Fachen des in Achsrichtung betrachteten Abstands der beiden Grundkörperebenen Eᵤ und Eₒ zueinander entspricht.

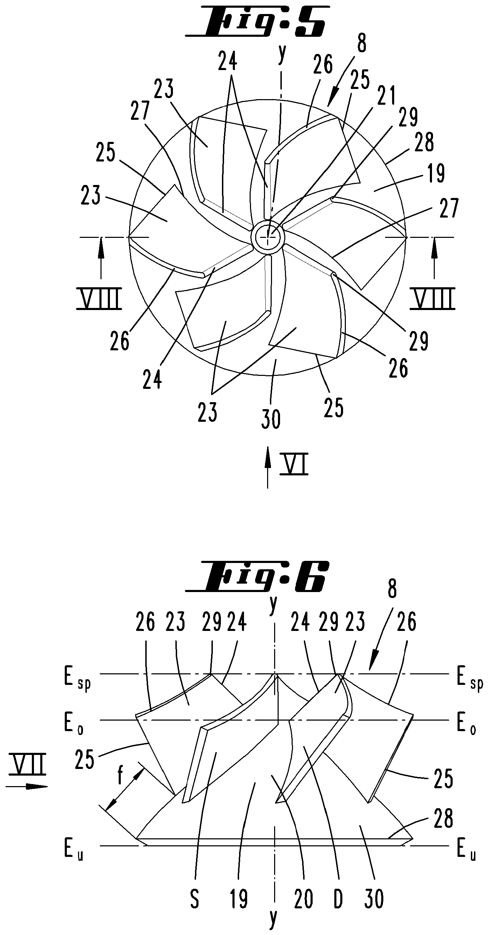

Weiter sind an dem Lüfterrad 8 Lüfterradschaufeln 23 angeordnet. Bevorzugt sind sechs derartiger Lüfterradschaufeln 23 vorgesehen, die mit Bezug auf eine Draufsicht auf das Lüfterrad 8 gemäß der Darstellung in Figur 5 gleichmäßig um die Drehachse y verteilt angeordnet und bodenseitig mit dem Grundkörper 19 verbunden sind. Bevorzugt ist diesbezüglich eine materialeinheitliche und einstückige Ausgestaltung von Grundkörper 19 und Lüfterradschaufeln 23. Bevorzugt ist weiter das so gestaltete Lüfterrad 8 in einem Kunststoff-Spritzverfahren hergestellt.

Die nachstehend näher beschriebene Ausgestaltung einer jeden Lüfterradschaufel 23 ergibt in bevorzugter Ausgestaltung, wie insbesondere aus der Draufsicht in Figur 5 zu erkennen, eine Anordnung der Lüfterradschaufeln 23, in welcher diese mit Bezug auf eine Draufsicht ohne gegenseitige Überlappung gebildet sind. Entsprechend überdeckt in einer Vertikalprojektion in Richtung auf die unterste Grundkörperebene Eᵤ kein Teilbereich einer Lüfterradschaufel 23 einen Teilbereich einer weiteren Lüfterradschaufel 23.

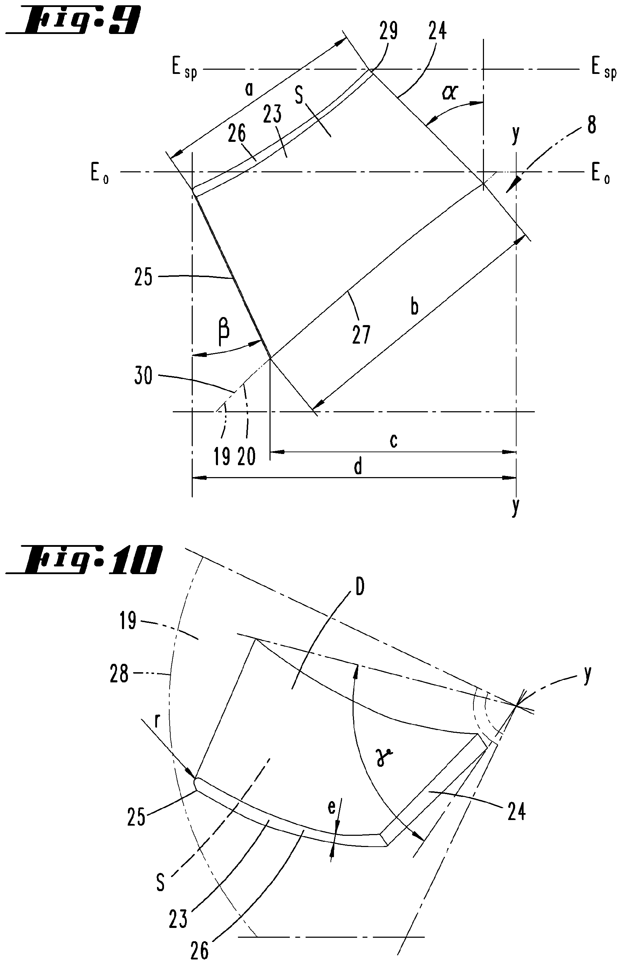

Die Figuren 9 und 10 zeigen eine Lüfterradschaufel 23 in Seiten- sowie Draufsicht, wobei insbesondere in der Seitenansicht in strichpunktierter Linienart ein Teilausschnitt der Außenkontur des Grundkörpers 19 dargestellt ist.

Jede Lüfterradschaufel 23 weist eine mit Bezug auf die Drehachse y radial Innere Schaufeleintrittskante 24 auf, die sich von einem Anbindungsbereich der Lüfterradschaufel 23 an dem Grundkörper 19 von dem Grundkörper 19 entfernend erstreckt.

Radial Außen formt jede Lüfterradschaufel 23 eine Schaufelaustrittskante 25 aus, welche sich gleichfalls ausgehend vom Anbindungsbereich vom Grundkörper 19 weg erstreckt.

Schaufeleintrittskante 24 und Schaufelaustrittskante 25 sind im Bereich ihrer, dem Grundkörper 19 entfernten Enden verbunden über eine Schaufellängskante 26. Die der Schaufellängskante 26 gegenüberliegende, entsprechend die im Bereich der Anbindung der Lüfterradschaufel 23 an dem Grundkörper 19 ausgebildeten Enden der Schaufeleintrittskante 24 und Schaufelaustrittskante 25 verbindende Linie ist als Fußlinie 27 bezeichnet.

Sowohl die Schaufeleintrittskante 24 als auch weiter bevorzugt die Schaufelaustrittskante 25 verlaufen zwischen der Fußlinie 27 und der Schaufellängskante 26 geradlinig gestreckt.

Die Schaufeleintrittskante 24 schließt zu der Drehachse y beziehungsweise zu einer Achsparallelen einen Winkel α von bevorzugt 45 Grad ein, dies bei entsprechender Neigung der Schaufeleintrittskante 24 ausgehend von der Fußlinie 27 nach radial Außen.

Die Schaufelaustrittskante 25 ist weiter bevorzugt so ausgerichtet, dass diese in einer Seitenansicht gemäß der Darstellung in Figur 9 zu der Drehachse y beziehungsweise zu einer Achsparallelen einen Winkel β von bevorzugt etwa 25 Grad einschließt, dies bei einer Neigung der Schaufelaustrittskante 25 ausgehend von der Fußlinie 27 in Richtung auf die Schaufellängskante 26 nach radial Außen.

Die Schaufellängskante 26 verläuft mit Bezug auf eine Seitenansicht gemäß Figur 9 bevorzugt annähernd parallel zu der durch die Außenkontur des Grundkörpers 19 gegebenen Fußlinie 27, darüber hinaus gegebenenfalls eine parallel zur Fußlinie 27 verlaufende Verbindungslinie zwischen der Schaufeleintrittskante 24 und der Schaufelaustrittskante 25 partiell über- oder unterschreitend. So ist diesbezüglich weiter bevorzugt eine vom Grundkörper 19 aus betrachtete konkave Ausgestaltung der Schaufellängskante 26 vorgesehen, wobei ein entsprechendes maximales Rückversetzungsmaß der Schaufellängskante 26 bezogen auf die vorbezeichnete Verbindungslinie maximal dem 1- bis 2-Fachen der quer zur Betrachtungsebene in Figur 9 betrachteten Materialstärke der Lüfterradschaufel 23 entspricht. Auch kann eine entsprechende konvexe Ausgestaltung vorgesehen sein.

Die Länge a der Schaufellängskante 26 entspricht in bevorzugter Ausgestaltung dem 0,6- bis 0,8-Fachen der Länge b der Fußlinie 27.

Weiter ist die Ausgestaltung einer jeden Lüfterradschaufel 23 so gewählt, dass ein Radiusmaß c des Übergangs der Schaufelaustrittskante 25 in den Grundkörper 19 beziehungsweise in die Fußlinie 27 dem 0,8- bis 0,9-Fachen des maximalen Radiusmaßes d der Schaufelaustrittskante 25 zur Drehachse y entspricht.

Die durch die Schaufeleintrittskante 24, die Schaufelaustrittskante 25 sowie durch die Schaufellängskante 26 und die Fußlinie 27 aufgespannten Schaufelflächen bilden eine Druckseite D und eine Saugseite S. Zugewandt der Druckseite D ist die Schaufelaustrittskante 25 im Querschnitt, d.h. weiter bevorzugt in einem parallel zur Fußlinie 27 betrachteten Schnitt, gerundet ausgebildet. Bevorzugt ist hier insbesondere der Druckseite D zugewandt ein Radius r der Rundung vorgesehen, der dem 0,5- bis 0,8-Fachen der Schaufeldicke e zwischen den Schaufelflächen entspricht.

Die Schaufeleintrittskante 24 weist in Draufsicht gemäß der Darstellung in Fig. 10 eine sich im wesentlichen quer zur Schaufellängsrichtung erstreckende ebene Fläche auf.

Weiter ist eine jede Lüfterradschaufel 23 so ausgebildet und an dem Grundkörper 19 angeordnet, dass sich mit Bezug auf eine Draufsicht gemäß Figur 10 gemessen von der Drehachse y ein Umfangswinkelbereich beziehungsweise ein Schaufelumschlingungswinkel γ im Wesentlichen zwischen dem Anbindungsbereich der Schaufeleintrittskante 24 an dem Grundkörper 19 und dem Anbindungsbereich der Schaufelaustrittskante 25 an dem Grundkörper 19 von bevorzugt 40 bis 55 Grad einstellt.

Weiter bevorzugt sind alle Lüfterradschaufeln 23 gleich ausgebildet, weiter bevorzugt entsprechend der vorbeschriebenen Beschreibung anhand einer Lüfterradschaufel 23.

Weiter sind, wie insbesondere aus der Draufsicht in Figur 5 zu erkennen, die Lüfterradschaufeln 23 so angeordnet, dass diese die umlaufende Bodenrandkante des Grundkörpers 19 im Bereich der untersten Grundkörperebene Eᵤ nicht überragen. Vielmehr ist bevorzugt vorgesehen, dass mit Bezug auf eine Draufsicht die Schaufellängskanten 26 im Bereich der Schaufelaustrittskanten 25 mit der umlaufenden Bodenrandkante 28 des Grundkörpers 19 enden.

Die Anordnung der Lüfterradschaufel 23 ist erfindungsgemäß so vorgesehen, dass die im Übergang von der Schaufellängskante 26 in die Schaufeleintrittskante 24 gebildeten Lüfterradspitzen 29 die in Richtung der Drehachse y betrachtete höchste Erstreckung der Lüfterradschaufel 23 bilden. Weiter sind alle Lüfterradspitzen 29 in einer gemeinsamen, quer zur Drehachse y ausgerichteten Ebene E_{SP} angeordnet, welche Lüfterradspitzenebene E_{SP} in Richtung der Drehachse y nach oben beabstandet ist zur obersten Grundkörperebene Eₒ. Dieser Abstand ist erfindungsgemäß so gewählt, dass sich mit Bezug auf eine Seitenansicht gegen eine Lüfterradschaufel 23 gemäß der Darstellung in Figur 9 oberhalb der obersten Grundkörperebene Eₒ eine Schaufelteilfläche einstellt, die 20 bis 50 Prozent der gesamten Schaufelfläche entspricht.

Auch ist erfindungsgemäß vorgesehen, dass die Lüfterradschaufeln 23 bezüglich ihrer Anbindung im Bereich der Schaufelaustrittskanten 25 an dem Grundkörper 19 mit Abstand zu der Bodenrandkante 28 enden. Das Erstreckungsmaß f entlang der Außenkontur des Grundkörpers 19 (vergleiche Figur 6) des so schaufelfreien Sockelbereiches des Grundkörpers 19 entspricht bevorzugt dem 0,6- bis 0,8-Fachen der Länge a der Schaufellängskante 26 in Draufsicht.

Der schaufelfreie Sockelbereich des Grundkörpers 19 formt einen Diffusorbereich 30, insbesondere einen Diffusor-Teilbereich aus, der entsprechend mit dem Lüfterrad 8 mitdrehend um die Drehachse y ist.

Das Strömungsführungsteil 6 ist bevorzugt doppelwandig ausgebildet, mit einer äußeren Wand 31, die bevorzugt durch die Motorgehäusewandung 7 gebildet ist, und einer koaxial hierzu angeordneten inneren Wand 32. In dem so gebildeten Radialzwischenraum 33 sind bevorzugt sechzehn gleichmäßig um die Rotorachse x angeordnete Leitschaufeln 34 vorgesehen.

Die Leitschaufeln 34 erstrecken sich im Wesentlichen jeweils - in etwa von der Motorgehäuse-Randkante 12 ausgehend - schaufelartig gewölbt in Richtung auf die Luftausströmöffnung 17 und sind weiter bevorzugt sowohl an der inneren Wand 32 als auch an der äußeren Wand 31 angebunden. Bevorzugt wird diesbezüglich weiter eine einstückige, materialeinheitliche Ausgestaltung der Leitschaufeln 34 mit den inneren und äußeren Wänden 31 und 32.

Jede Leitschaufel 34 weist in Umfangsrichtung des Strömungsführungsteiles 6 beziehungsweise des Radialzwischenraumes 33 eine vorgewölbte Saugseiten-Schaufelfläche 35 und rückwärtig derselben eine entsprechend gewölbte Druckseiten-Schaufelfläche 36 auf.

Die innere Wand 32 des Strömungsführungsteiles 6 erstreckt sich im Wesentlichen über die Ebene der Motorgehäuse-Randkante 12 hinaus, unter Bildung des Lagerbereiches 11.

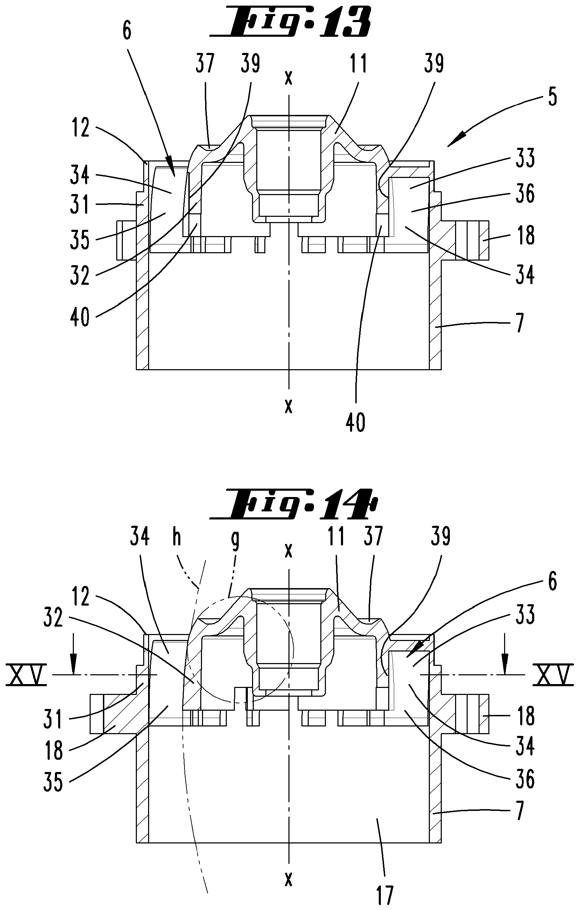

Die Außenkontur der inneren Wand 32, d.h. die mit Bezug auf einen Vertikalschnitt gemäß Figur 2 dem Radialzwischenraum 33 zugewandte Kontur, verläuft bevorzugt stetig gekrümmt, wobei weiter bevorzugt ausgehend von einem über die Motorgehäuse-Randkante 12 hinausgehenden Endbereich der inneren Wand 32 der örtliche Krümmungsradius in Strömungsrichtung beziehungsweise in Richtung auf den, dem Stator 2 zugewandten Ende der inneren Wand 32, zunimmt. Der Krümmungsradius nimmt weiter derart zu, dass abschließend in dem in Strömungsrichtung betrachteten Endbereich der inneren Wand 32 die Außenkontur in eine Vertikale übergeht (vergleiche strichpunktierte, mit den unterschiedlichen, zunehmenden Radien versehene Kreislinien g und h in Figur 14).

Insbesondere der in Strömungsrichtung betrachtete erste Krümmungsradius (vergleiche Krümmungslinie g) ist in bevorzugter Ausgestaltung angepasst an die Außenkontur des Grundkörpers 19, insbesondere an die Außenkontur im Diffusorbereich 30. Hierzu ist das nach oben weisende Ende der inneren Wand 32 durchmessermäßig bevorzugt angepasst an den Durchmesser des Grundkörpers 19 beziehungsweise des Lüfterrades 8 im Bereich der Bodenrandkante 28.

Ausgehend von diesem, dem Lüfterrad 8 zugewandten Ende der inneren Wand 32 setzt sich nach radial Innen zunächst eine rinnenartige, konzentrisch zur Rotorachse x verlaufende Vertiefung 37 an. Diese umschließt im Wesentlichen den rotationssymmetrisch zur Rotorachse x ausgebildeten, insgesamt bevorzugt kegelstumpfförmigen Lagerbereich 11. Dieser Lagerbereich 11 taucht entsprechend bevorzugt in den durch die Grundkörperwandung 20 umfassten Hohlraum des Grundkörpers 19 ein, weiter bevorzugt bis hin in eine quer zur Rotorachse x betrachtete Ebene, die unmittelbar unterhalb der Sockelebene des lüfterradseitigen Festlegungsbereiches 22 liegt.

Weiter bevorzugt steigt die Außenkontur des Lagerbereiches 11 mit Bezug auf einen Meridianschnitt zumindest annähernd parallel zur Innenkontur der Grundkörperwandung 20 an, hierbei weiter bevorzugt einen von radial Außen nach radial Innen ansteigenden Spalt 38 belassend.

Weiter weist die innere Wand 32 in Umfangsrichtung derselben betrachtet Rücksprungbereiche 39 auf, in welchen Bereichen die in Richtung auf den Radialzwischenraum 33 weisende Kontur der inneren Wand 32 gegenüber dem stetig gekrümmten Verlauf nach radial Innen versetzt ist. Die mit Bezug auf die Rotorachse x betrachtete Rücksprungtiefe gegenüber dem gekrümmten Bereich der inneren Wand 32 entspricht bevorzugt der 1- bis 4-Fachen Dicke der turbulenten Grenzschicht.

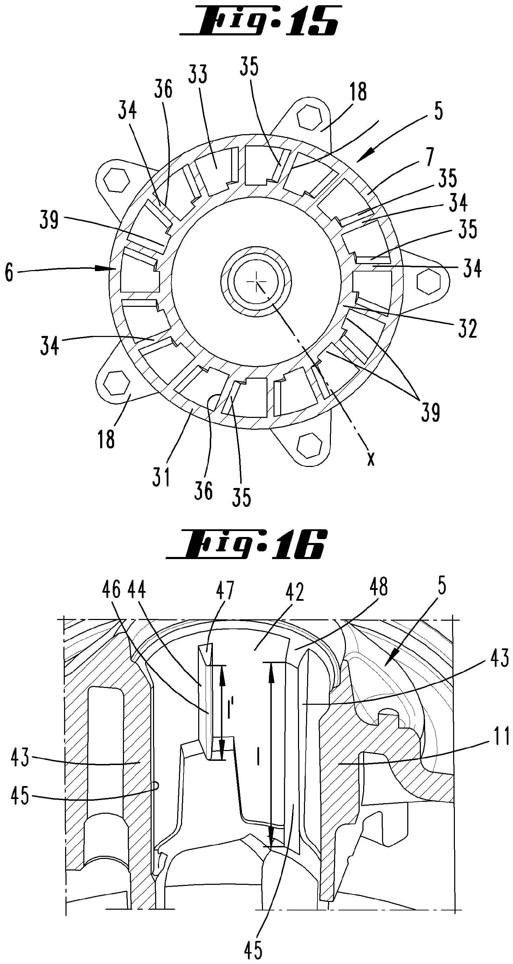

Die Kontur der Außenfläche der inneren Wand 32 verläuft in den Rücksprungbereichen 39 bevorzugt geradlinig, weiter bevorzugt parallel zur Rotorachse x. Weiter bevorzugt sind die Rücksprungbereiche 39 bezogen auf eine Draufsicht beziehungsweise bezogen auf eine Schnittdarstellung gemäß Figur 15 jeweils der Leitschaufel-Druckseite 36 einer jeden Leitschaufel 34 zugeordnet. Entsprechend weist die ablösungsgefährdete Leitschaufel-Saugseite 35 gegenüber der Leitschaufel-Druckseite 36 in einem Meridianschnitt eine Querschnittsverengung auf, die zu einer Strömungsbeschleunigung an der Leitschaufel-Saugseite 35 führt.

Zudem sind im Bereich der inneren Wand 32 fensterartige Durchbrüche 40 belassen, durch welche insbesondere der Stator 2 freiliegt. Im Betrieb des Elektromotors 1 und entsprechend im Betrieb des Lüfterrades 8 kann so durch die Durchbrüche 40 ein Teil der durch das Strömungsführungsteil 6 geführten Luft direkt an den Stator 2 zur Kühlung desselben gelangen.

Der vorbeschriebene Elektromotor 1 mit einem Lüfterrad 8 weist einen gegenüber dem Stand der Technik verbesserten Wirkungsgrad auf.

Der Schwerpunkt des Lüfterrades 8 ist in Richtung auf das Wälzlager 10 in dem Lagerbereich 11 verschoben, wodurch eine Erhöhung der biegekritischen Resonanzfrequenz erreicht ist.

Der Diffusorbereich 30 des Lüfterrades 8 eignet sich weiter zum Auswuchten des Lüfterrades 8, in dem bevorzugt Material am Außendurchmesser auf der Innenseite des Grundkörpers 19 abgetragen wird. Darüber hinaus eignet sich der Diffusorbereich 30 zum Greifen des Lüfterrades 8 bei einem Roboter-Handling.

Figur 16 zeigt in einer zweiten Ausführungsform das Motorgehäuse 5, insbesondere den Lagerbereich 11.

Wie in Figur 2 dargestellt, setzt sich das Wälzlager 10 aus zwei in Axialrichtung zueinander distanzierten Lagerbereichen zusammen, die in einer, insbesondere den Lageraußenring umgebenden Hülse 41 aufgenommen sind. Diese Hülse 41 ist in einer Ausgestaltung drehfest mit dem Außenring eines jeden Wälzlagers verbunden. In weiterer Ausgestaltung - wie in Figur 2 schematisch dargestellt - sind die beiden Lager voneinander weg in Axialrichtung durch eine Feder belastet, d.h. in der Hülse 41 zumindest partiell in Axialrichtung verlagerbar gehalten.

Die Hülse 41 ist weiter bevorzugt Teil der Rotorwelle 4. Über diese Hülse 41 erfolgt die Festlegung der Rotorwelle 4 in dem Motorgehäuse 5, insbesondere im Lagerbereich 11.

Der Lagerbereich 11 weist hierbei zunächst eine konzentrisch zur Rotorachse x verlaufende Wandung 42 auf. Diese weist einen freien Innen-Durchmesser auf, der größer gewählt ist als der Außendurchmesser der Hülse 41. So ist diesbezüglich ein Innendurchmesser der Wandung 42 bevorzugt, der dem 1,1- bis 1,5-Fachen des Außendurchmessers der Hülse 41 entspricht.

Mit Bezug auf den inneren Umfang der Wandung 42 sind von der Wandung 42 ausgehend, nach radial innen sich erstreckend mehrere Rippen angeformt. In bevorzugter Ausgestaltung sind dies jeweils drei Spielpassungsrippen 43 und Presspassungsrippen 44. Diese Rippen sind insgesamt mit Bezug auf den Umfang gleichmäßig verteilt angeordnet, wobei weiter bevorzugt sich in Umfangsrichtung Spielpassungsrippen 43 und Presspassungsrippen 44 abwechseln. So schließen weiter bevorzugt zwei in Umfangsrichtung benachbarte (jedoch durch eine Presspassungsrippe 44 voneinander getrennte) Spielpassungsrippen 43 einen Winkel von bevorzugt 120° ein. Gleiches gilt für die Presspassungsrippen 44.

In weiter bevorzugter Ausgestaltung erstrecken sich die Spielpassungsrippen 43 sowie die Presspassungsrippen 44 insbesondere hinsichtlich ihrer nach radial innen weisenden Stirnkanten in Parallelausrichtung zur Rotorachse x.

Jede Spielpassungsrippe 43 weist eine in Achserstreckungsrichtung betrachtete Länge l insbesondere im Bereich der nach radial innen weisenden Stirnfläche 45 auf, die bevorzugt an die axiale Länge der Hülse 41 angepasst ist. So ist weiter bevorzugt die Länge l der Stirnfläche 45 gleich der Länge der Hülse 41, wobei weiter bevorzugt in einer Horizontalprojektion die Stirnfläche 45 bevorzugt in vollständiger Überdeckung zu der Mantelfläche der Hülse 41 angeordnet ist. Die Stirnflächen 46 der Presspassungsrippen 44 weisen eine gegenüber der Länge l der Spielpassungsrippen 43 verringerte Länge l' auf. So entspricht in bevorzugter Ausgestaltung die Länge l' einer Presspassungsrippen-Stirnfläche 46 etwa dem 0,4- bis 0,6-Fachen der Länge l einer Spielpassungsrippe 43.

Weiter bevorzugt sind die Presspassungsrippen 44 in ihrer axialen Ausrichtung so angeordnet, dass deren Stirnflächen 46 in einer Horizontalprojektion in Überdeckung liegen zu dem sich zwischen den Wälzlagern 10 erstreckenden Mantelwandabschnitt der Hülse 41.

Die Stirnflächen 46 der Presspassungsrippen 44 sind bevorzugt verrundet, weiter bevorzugt mit einer nach radial innen, d.h. in Richtung auf die Rotorachse x weisenden Auswölbung (bezogen auf einen Querschnitt).

Eine die gewölbten Stirnflächen 46 der Presspassungsrippen 44 tangierende Kreislinie weist in bevorzugter Ausgestaltung einen Durchmesser auf, der dem Außendurchmesser der Hülse 41 entspricht.

Die Stirnflächen 45 der Spielpassungsrippen 43 sind gegenüber den Stirnflächen 46 der Presspassungsrippen 44 vergleichsweise flächig ausgestaltet, insbesondere mit Bezug auf einen Querschnitt kreisabschnittförmig mit einem sich auf die Rotorachse x beziehenden Radius. Die in Umfangserstreckung betrachtete Breite einer solchen Stirnfläche 45 beträgt bevorzugt 1,5 bis 4 mm.

Eine die Stirnflächen 45 der Spielpassungsrippen 43 verbindende Kreislinie weist hier einen Durchmesser auf, der bevorzugt größer gewählt ist als der Außendurchmesser der Hülse 41 im Bereich ihrer Mantelfläche. So ist weiter bevorzugt eine Kreislinie mit einem Durchmesser gewählt, der dem 1,05- bis 1,2-Fachen des Außendurchmessers der Hülse 41 entspricht. Weiter bevorzugt ergibt sich bei eingesetzter Hülse 41 zwischen der Mantelfläche der Hülse 41 und der zugewandten Stirnfläche 45 der Spielpassungsrippen 43 ein Spalt mit einem in radialer Richtung betrachteten Maß von bevorzugt 0,1 bis 0,3 mm. Zur Montage der Motorwelle 4 in dem Motorgehäuse 5 wird die über die Wälzlager 10 mit der Motorwelle 4 verbundene Hülse 41 in Axialrichtung in den Lagerbereich 11 eingeschoben. Sowohl die Presspassungsrippen 44 als auch die Spielpassungsrippen 43 verfügen zur Erleichterung des Einführens über Einführschrägen 47, 48, welche sich in einem Vertikalschnitt vom Grund der jeweiligen Rippe bis hin zur jeweiligen Stirnfläche abfallend erstrecken. Insbesondere die Stirnflächen 45 der Spielpassungsrippen 43 sind zuvor mit einem Klebstoff versehen.

Die gefundene Stellung der Hülse 41 in dem Lagerbereich 11, insbesondere die axiale Stellung ist zunächst fixiert zufolge einer Presspassung zwischen den Presspassungsrippen 44 und der hierdurch beaufschlagten Hülse 41. Die Presspassungsrippen 44 halten entsprechend die Hülse 41 und hierüber die Rotorwelle 4 in ihrer Ausrichtung, bis der Klebstoff ausgehärtet ist.

**Bezugszeichenliste:**

| | | | |
|---|---|---|---|
| 1 | Elektromotor | 25 | Schaufelaustrittskante |
| 2 | Stator | 26 | Schaufellängskante |
| 3 | Rotor | 27 | Fußlinie |
| 4 | Rotorwelle | 28 | Bodenrandkante |
| 5 | Motorgehäuse | 29 | Lüfterradspitze |
| 6 | Strömungsführungsteil | 30 | Diffusorbereich |
| 7 | Motorgehäusewandung | 31 | äußere Wand |
| 8 | Lüfterrad | 32 | innere Wand |
| 9 | Rotorwellenende | 33 | Radialzwischenraum |
| 10 | Wälzlager | 34 | Leitschaufel |
| 11 | Lagerbereich | 35 | Leitschaufel-Saugseite |
| 12 | Motorgehäuse-Randkante | 36 | Leitschaufel-Druckseite |
| 13 | Gebläsedeckel | 37 | Vertiefung |
| 14 | Gebläsedeckelwandung | 38 | Spalt |
| 15 | Lufteinströmöffnung | 39 | Rücksprungbereich |
| 16 | Decke | 40 | Durchbruch |
| 17 | Luftausströmöffnung | 41 | Hülse |
| 18 | Schraubfestlegungsvorsprung | 42 | Wandung |
| 19 | Grundkörper | 43 | Spielpassungsrippe |
| 20 | Grundkörperwandung | 44 | Presspassungsrippe |
| 21 | Befestigungsbohrung | 45 | Stirnfläche |
| 22 | Festlegungsbereich | 46 | Stirnfläche |
| 23 | Lüfterradschaufel | 47 | Einführschräge |
| 24 | Schaufeleintrittskante | 48 | Einführschräge |
| a | Länge | D | Druckseite |
| b | Länge | | |
| c | Radiusmaß | Eₒ | oberste Grundkörperebene |
| d | Radiusmaß | E_{SP} | Lüfterrad-Spitzenebene |
| e | Schaufeldicke | Eᵤ | unterste Grundkörperebene |
| f | Erstreckungsmaß | | |
| g | Kreislinie | α | Winkel |
| h | Kreislinie | β | Winkel |
| l | Länge | γ | Schlaufenumschlingungswinkel |
| l' | Länge | | |
| r | Radius | | |
| x | Rotorachse | | |
| y | Drehachse | | |

## Patentansprüche

1. Lüfterrad (8) mit einem rotationssymmetrischen Grundkörper (19), mit einer umlaufenden Grundkörperwandung (20), die im Wesentlichen einen Hohlkegel bildet,
wobei der Grundkörper (20) mittig von einer Drehachse (y) durchsetzt ist und in einer Seitenansicht von radial Außen nach radial Innen bezüglich seiner Außenkontur stetig ansteigt, wobei Lüfterradschaufeln (23) vorgesehen sind, die bodenseitig mit dem Grundkörper (19) verbunden sind, wobei weiter jede Lüfterradschaufel (23) mit Bezug auf die Drehachse (y) eine radial innere Schaufeleintrittskante (24) aufweist, die sich von einem Anbindungsbereich der Lüfterrradschaufel (23) an dem Grundkörper (19) von dem Grundkörper (19) entfernend erstreckt, und jede Lüfterradschaufel (23) radial außen eine Schaufelaustrittskante (25) ausformt, welche sich gleichfalls ausgehend von dem Anbindungsbereich am Grundkörper (19) weg erstreckt, wobei darüber hinaus die Schaufeleintrittskante (24 ) und die Schaufelaustrittskante (25) im Bereich ihrer dem Grundkörper (19) entfernten Enden verbunden sind über eine Schaufellängskante (26), wobei im Übergang von der Schaufellängskante (26) in die Schaufeleintrittskante (24) Lüfterradspitzen (29) gebildet sind, die in Richtung der Drehachse (y) betrachtet eine höchste Erstreckung der Lüfterradschaufel (23) bilden, wobei die Lüfterradschaufeln (23) bodenseitig mit Abstand zu einer Randkante (28) des Grundkörpers (19) enden, unter Bildung eines Diffusorbereiches (30), wobei die Lüfterradspitzen (29) den Grundkörper (19) überragen und alle Lüfterradspitzen (29) in einer gemeinsamen, quer zu der Drehachse (y) ausgerichteten Ebene (ESP) angeordnet sind, die in Richtung der Drehachse (y) nach oben beabstandet ist zu einer obersten Grundkörperebene (E0), **dadurch gekennzeichnet, dass** dieser Abstand so gewählt ist, dass sich mit Bezug auf eine Seitenansicht gegen eine Lüfterradschaufel (23) oberhalb der obersten Grundkörperebene (E0) eine 20 bis 50 % der gesamten Schaufelfläche entsprechende Schaufelteilfläche einstellt und dass in einer Projektion in Richtung auf eine unterste Grundkörperebene die Lüfterradschaufeln (23) eine umlaufende untere Bodenrandkante nicht überragen.

2. Lüfterrad nach Anspruch 1, **dadurch gekennzeichnet, dass** ein Radius (d) der maximalen Erstreckung einer Lüfterradschaufel (23) in einer Draufsicht zwischen dem 1,0 bis 0,6-Fachen des Radius der maximalen Erstreckung des Grundkörpers liegt.

3. Lüfterrad nach einem der vorhergehenden Ansprüche, **dadurch gekennzeichnet, dass** eine gerade verlaufende Schaufeleintrittskante (24) zu der Drehachse (y) einen Winkel (α) von 35° bis 55° einschließt.

4. Lüfterrad nach einem der vorhergehenden Ansprüche, **dadurch gekennzeichnet, dass** ein Erstreckungsmaß (f) des Diffusorbereiches (30) in einer Seitenansicht dem 0,5- bis 0,9-Fachen eines Erstreckungsmaßes (a) der Schaufellängskante (26) in Draufsicht entspricht, wobei, bevorzugt, das Erstreckungsmaß (a) der Schaufellängskante (26) bezogen auf eine Fußlinie (27) der Lüfterradschaufel (23) in einem Verhältnis von 0,5 bis 0,9 gegeben ist.

5. Lüfterrad nach einem der vorhergehenden Ansprüche, **dadurch gekennzeichnet, dass** eine sich gerade erstreckende Schaufelaustrittskante (25) in einer Seitenansicht zu der Drehachse (y) einen Winkel (β) von 15° bis 35° einschließt, wobei, bevorzugt, ein Radiusmaß (c) der Schaufelaustrittskante (25) in den Grundkörper (19) dem 0,7- bis 0,95-Fachen des Radiusmaßes (d) der Schaufelaustrittskante (25) entspricht.

6. Lüfterrad nach Anspruch 5, **dadurch gekennzeichnet, dass** die Schaufelaustrittskante (25) im Querschnitt gerundet ausgebildet ist wobei, bevorzugt, ein Radius (r) der Rundung dem 0,4- bis 0,9-Fachen der Schaufeldicke (e) entspricht.

7. Lüfterrad nach einem der vorhergehenden Ansprüche, **dadurch gekennzeichnet, dass** sich eine Lüfterradschaufel (23) in Draufsicht in einem Umfangswinkelbereich, gemessen von der Drehachse (y), von 35° bis 60° erstreckt.

8. Lüfterrad nach einem der vorhergehenden Ansprüche, **dadurch gekennzeichnet, dass** die Lüfterradschaufeln (23) in einer Draufsicht ohne gegenseitige Überlappung gebildet sind und/ oder, bevorzugt, dass vier bis acht Lüfterradschaufeln (23) vorgesehen sind.

## Claims

1. Fan wheel (8) with a rotationally symmetrical base body (19), with a circumferential base body wall (20) which essentially forms a hollow cone, wherein the base body (20) is penetrated centrally by an axis of rotation (y) and in a side view rises continuously from radially outside to radially inside with respect to its outer contour, wherein fan wheel blades (23) are provided which are connected to the base body (19) on the bottom side, wherein furthermore each fan wheel blade (23) has, with respect to the axis of rotation (y), a radially inner blade leading edge (24) which extends away from the base body (19) from an attachment region of the fan wheel blade (23) to the base body (19), and each fan wheel blade (23) forming radially outwardly a blade exit edge (25) which likewise extends away from the connection region on the base body (19), wherein in addition the blade leading edge (24) and the blade exit edge (25) are connected in the region of their ends remote from the base body (19) via a blade longitudinal edge (26), wherein in the transition from the blade longitudinal edge (26) into the blade leading edge (24) fan wheel tips (29) are formed which, viewed in the direction of the axis of rotation (y), form a highest extension of the fan wheel blade (23), wherein the fan wheel blades (23) end on the bottom side at a distance from an edge (28) of the base body (19), forming a diffuser region (30), the fan wheel tips (29) projecting beyond the base body (19) and all the fan wheel tips (29) being arranged in a common plane (ESP) aligned transversely to the axis of rotation (y), which is spaced upwardly in the direction of the axis of rotation (y) from an uppermost base body plane (E0), **characterised in that** this spacing is selected so that, with respect to a side view against a fan wheel blade (23) above the uppermost base body plane (E0), a partial blade area corresponding to 20 to 50% of the total blade area is produced and that, in a projection in the direction of a lowermost base body plane, the fan wheel blades (23) do not project beyond a circumferential lower base edge.

2. Fan wheel according to claim 1, **characterised in that** a radius (d) of the maximum extension of a fan wheel blade (23) in a plan view is between 1.0 and 0.6 times the radius of the maximum extension of the base body.

3. Fan wheel according to one of the preceding claims, **characterised in that** a straight blade leading edge (24) encloses an angle (α) of 35° to 55° to the axis of rotation (y).

4. Fan wheel according to one of the preceding claims, **characterised in that** an extension dimension (f) of the diffuser region (30) in a side view corresponds to 0.5 to 0.9 times an extension dimension (a) of the blade longitudinal edge (26) in plan view, wherein, preferably, the extension dimension (a) of the blade longitudinal edge (26) relative to a root line (27) of the fan wheel blade (23) is given in a ratio of 0.5 to 0.9.

5. Fan wheel according to one of the preceding claims, **characterised in that** a straight extending blade exit edge (25) includes an angle (β) of 15° to 35° in a side view to the axis of rotation (y), wherein, preferably, a radius dimension (c) of the blade exit edge (25) into the main body (19) corresponds to 0.7 to 0.95 times the radius dimension (d) of the blade exit edge (25).

6. Fan wheel according to claim 5, **characterised in that** the blade exit edge (25) is rounded in cross-section, wherein, preferably, a radius (r) of the rounding corresponds to 0.4 to 0.9 times the blade thickness (e).

7. A fan wheel according to any one of the preceding claims, **characterised in that** a fan wheel blade (23) extends, in plan view, in a circumferential angular range, measured from the axis of rotation (y), of 35° to 60°.

8. Fan wheel according to one of the preceding claims, **characterised in that** the fan wheel blades (23) are formed in a plan view without overlapping each other and/or, preferably, that four to eight fan wheel blades (23) are provided.

## Revendications

1. Roue de ventilateur (8) avec un corps de base (19) à symétrie de révolution, avec une paroi de corps de base (20) périphérique, qui forme essentiellement un cône creux, le corps de base (20) étant traversé en son milieu par un axe de rotation (y) et augmentant constamment, en vue latérale, de l'extérieur radialement vers l'intérieur radialement par rapport à son contour extérieur, des pales de ventilateur (23) étant prévues, qui sont reliées côté fond au corps de base (19), chaque pale de ventilateur (23) présentant en outre, par rapport à l'axe de rotation (y), un bord d'entrée de pale (24) radialement intérieur, qui s'étend à partir d'une zone de fixation de la pale de ventilateur (23) sur le corps de base (19), en s'éloignant du corps de base (19), et chaque pale de ventilateur (23) forme radialement à l'extérieur un bord de sortie de la pale (25), qui s'étend également en s'éloignant de la zone de liaison au corps de base (19), le bord d'entrée (24) de la pale et le bord de sortie (25) de la pale étant en outre reliés dans la zone de leurs extrémités éloignées du corps de base (19) par un bord longitudinal (26) de la pale, des pointes de roue de ventilateur (29) étant formées dans la transition entre le bord longitudinale de la pale (26) et l'arête d'entrée de la pale (24), lesquelles forment une extension maximale de le pale de roue de ventilateur (23), vu dans la direction de l'axe de rotation (y), les aubes de roue de ventilateur (23) se terminant du côté du fond à distance d'une arête de bord (28) du corps de base (19), en formant une zone de diffuseur (30), les pointes de roue de ventilateur (29) dépassant du corps de base (19) et toutes les pointes de roue de ventilateur (29) étant disposées dans un plan (ESP) commun orienté transversalement à l'axe de rotation (y), qui est espacé vers le haut, dans la direction de l'axe de rotation (y), d'un plan supérieur (E0) du corps de base, **caractérisé en ce que** cet espacement est choisi de telle sorte, que, par rapport à une vue latérale contre une pale de roue de ventilateur (23), il s'établit au-dessus du plan de corps de base le plus haut (E0) une surface partielle de la pale correspondant à 20 à 50 % de la surface totale des pales et que, dans une projection en direction d'un plan de corps de base le plus bas, les pales de roue de ventilateur (23) ne dépassent pas un bord de fond inférieur périphérique.

2. Roue de ventilateur selon la revendication 1, **caractérisée en ce qu'**un rayon (d) de l'extension maximale d'une pale de roue de ventilateur (23) en vue de dessus est compris entre 1,0 et 0,6 fois le rayon de l'extension maximale du corps de base.

3. Roue de ventilateur selon l'une des revendications précédentes, **caractérisée en ce qu'**un bord d'entrée (24) rectiligne forme un angle (α) de 35° à 55° avec l'axe de rotation (y).

4. Roue de ventilateur selon l'une quelconque des revendications précédentes, **caractérisée en ce qu'**une dimension d'extension (f) de la zone de diffuseur (30) en vue latérale correspond à 0,5 à 0,9 fois une dimension d'extension (a) du bord longitudinal de pale (26) en vue de dessus, dans laquelle, de préférence, la dimension d'extension (a) du bord longitudinal de pale (26) par rapport à une ligne de pied (27) de la pale de ventilateur (23) est donnée dans un rapport de 0,5 à 0,9.

5. Roue de ventilateur selon l'une quelconque des revendications précédentes, **caractérisée en ce qu'**un bord de sortie de la pale (25) s'étendant en ligne droite forme un angle (β) de 15° à 35° en vue latérale par rapport à l'axe de rotation (y), dans laquelle, de préférence, une dimension de rayon (c) du bord de sortie de la pale (25) dans le corps de base (19) correspond à 0,7 à 0,95 fois la dimension de rayon (d) du bord de sortie de la pale (25).

6. Roue de ventilateur selon la revendication 5, **caractérisée en ce que** le bord de sortie (25) de la pale est réalisé avec une section transversale arrondie, un rayon (r) de l'arrondi correspondant de préférence à 0,4 à 0,9 fois l'épaisseur (e) de la pale.

7. Roue de ventilateur selon l'une des revendications précédentes, **caractérisée en ce qu'**une pale de roue de ventilateur (23) s'étend, en vue de dessus, dans une plage d'angles circonférentiels, mesurée à partir de l'axe de rotation (y), de 35° à 60°.

8. Roue de ventilateur selon l'une des revendications précédentes, **caractérisée en ce que** les pales de roue de ventilateur (23) sont formées dans une vue de dessus sans chevauchement mutuel et/ou, de préférence, **en ce que** quatre à huit pales de roue de ventilateur (23) sont prévues.
